# EUROPEAN PATENT APPLICATION

(11) **EP 3 203 359 A1**
(43) Date of publication of application: **09.08.2017**
(21) Application number: 15847580.6
(22) Date of filing: 04.09.2015
(51) Int. Cl.: G06F 3/048, G06F 3/0488

(54) **METHOD FOR PROVIDING REMARK INFORMATION RELATED TO IMAGE, AND TERMINAL THEREFOR**

(30) Priority: 30.09.2014 CN 201410521223
(71) Applicant: Samsung Electronics Co., Ltd., Gyeonggi-do 16677 (KR)
(72) Inventor: LIANG, Jiayan, Guangzhou Guangdong 510000 (CN); SHI, Weixiong, Guangzhou Guangdong 510000 (CN); PARK, Jae-sun, Suwon-si Gyeonggi-do 16699 (KR)
(74) Representative: HGF Limited
(86) International application number: PCT/KR2015/009380
(87) International publication number: WO 2016/052874

(57) **Abstract**

Remark information related to an image is provided for effectively browsing the image on a device. To this end, the device includes: a first display portion configured to display at least one image; a second display portion configured to display remark information related to the at least one image; and a controller configured to control the remark information to be displayed on a display location of the second display portion, which corresponds to a location of the first display portion, on which the at least one image is displayed.

## Description

### TECHNICAL FIELD

The present invention relates to image browsing, and more particularly, to a method of providing remark information related to an image in image browsing and a device implementing the method.

### BACKGROUND ART

As a device, such as a mobile communication device, a tablet personal computer (PC), a game console, and a digital multimedia player, has increased storage capacities, the amount of images that are stored in the device has increased. An image stored in the device may include an image captured by a camera included in the device or an image received from an external device.

As described above, as the amount of images that are stored in the devices has increased, technology for effectively browsing the stored image has been required.

Information disclosed in this Background section was already known to inventors of the present invention before achieving the present invention or is acquired in the process of achieving the present invention. Therefore, it may contain information that does not form the prior art that is already known in this country to one of ordinary skill in the art.

### DETAILED DESCRIPTION OF THE INVENTION TECHNICAL SOLUTION

Embodiments disclosed herein relate to provide remark information related to an image, for effectively browsing the image on a device.

### ADVANTAGEOUS EFFECTS OF THE INVENTION

According to the embodiments disclosed herein, an image may be effectively browsed on a device.

### DESCRIPTION OF THE DRAWINGS

FIG. 1 shows an example in which a device displays an image, remark information, and a water mark, according to an embodiment.
FIG. 2 shows an example in which a device displays an image and remark information, according to an embodiment.
FIGS. 3 through 8 show examples of a first display portion and a second display portion included in a device, according to embodiments.
FIGS. 9 and 10 are operational flowcharts of a method of displaying remark information related to an image, the method being implemented in a device, according to an embodiment.
FIGS. 11A, 11B, and 11C show examples in which a device performs a predetermined operation based on a mark displayed in a first display portion, according to embodiments.
FIG. 12 shows an example in which a device is set for displaying remark information, according to an embodiment.
FIGS. 13 through 15 are operational flowcharts of a method of displaying remark information related to an image, the method being implemented in a device, according to embodiments.
FIGS. 16A through 16C show examples in which a device displays an image and remark information, when the device displays a plurality of images in a first display portion, according to an embodiment.
FIG. 17 is an operational flowchart of a method of providing remark information related to an image, the method being implemented by a device, according to an embodiment.
FIGS. 18 through 20 are functional block diagrams of a device, according to embodiments.
FIG. 21 is a functional block diagram of a system including a device, according to an embodiment.

### BEST MODE

According to an aspect of the present invention, there is provided a device configured to provide remark information related to an image. The device may include: a first display portion configured to display at least one image; a second display portion configured to display remark information related to the at least one image; and a controller, wherein the controller is configured to control the remark information to be displayed on a display location of the second display portion, which corresponds to a location of the first display portion, on which the at least one image is displayed.

The controller may control the second display portion to display the remark information based on the location of the first display portion, on which the at least one image is displayed.

The controller may be configured to determine whether to display the remark information according to a predetermined condition.

The predetermined condition may include at least one of a sensing result about whether a predetermined action is performed with respect to the device by a user, a sensing result about whether a predetermined operation is performed by the user while the at least one image is displayed on the first display portion, and a determination result about whether the device is set for displaying remark information.

The device may further include: a first user input unit configured to receive a user input based on the first display portion, and a second user input unit configured to receive a user input based on the second display portion, wherein the controller is configured to generate or edit the remark information based on the user input received by using the first user input unit and/or the second user input unit.

The second display portion may be configured to further display a mirror image of the image.

The controller may be configured to control the second display portion to further display at least one water mark on the second display portion.

The device may include the first display portion and the second display portion that are physically or logically separated.

The device may provide the first display portion and the second display portion in parallel, provide the first display portion and the second display portion such that a front surface of the first display portion and a front surface of the second display portion contact each other when the device is folded, or provide the first display portion and the second display portion such that a back surface of the first display portion and a back surface of the second display portion contact each other when the device is folded.

The device may further include a power supplier configured to supply power to the first display portion and the second display portion, and the controller may be configured to control the power supplier to selectively supply power to the first display portion and the second display portion.

The first display portion and the second display portion may include same or different materials.

The first display portion may be configured to display a plurality of images including a first image and a second image, and the controller may be configured to control the second display portion to display first remark information and second remark information on locations of the second display portion, which correspond to locations of the first display portion, on which the first image and the second image are displayed, respectively.

The at least one image may include a first object and a second object, and the controller may be configured to control the second display portion to display first remark information and second remark information on locations of the second display portion, which correspond to locations of the first display portion, on which the first object and the second object are displayed, respectively.

According to another aspect of the present invention, there is provided a method of providing remark information related to an image. The method may include: displaying at least one image on a first display portion of the device; and displaying remark information related to the at least one image on a display location of the second display portion, which corresponds to a location of the first display portion, on which the at least one image is displayed.

The method may include displaying at least one image on a first display portion of the device; and displaying at least one piece of remark information related to the image, on a second display portion of the device.

The displaying of the remark information may include displaying the remark information based on a location of the first display portion, on which the at least one image is displayed.

The method may further include determining whether to display the remark information according to a predetermined condition.

The method may further include generating or editing the remark information based on a first user input received based on the first display portion and/or a second user input received based on the second display portion.

The displaying of the remark information may include displaying a mirror image of the image displayed on the first display portion, on the second display portion.

The displaying of the remark information may include displaying at least one water mark on the second display portion.

The method may further include controlling power to be selectively supplied to the first display portion and the second display portion.

The displaying of the at least one image on the first display portion may include displaying a plurality of images including a first image and a second image on the first display portion, and the displaying of the remark information on the second display portion may include displaying first remark information and second remark information on locations of the second display portion, which correspond to locations of the first display portion, on which the first image and the second image are displayed, respectively.

The at least one image may include a first object and a second object, and the displaying of the remark information on the second display portion may include displaying first remark information and second remark information on locations of the second display portion, which correspond to locations of the first display portion, on which the first object and the second object are displayed, respectively.

According to another aspect of the present invention, there is provided a computer-readable recording medium having embodied thereon a computer program for executing the method of providing remark information related to an image.

### MODE OF THE INVENTION

Hereinafter, the present invention will be described more fully with reference to the accompanying drawings, in which exemplary embodiments of the invention are shown. The invention may, however, be embodied in many different forms and should not be construed as being limited to the embodiments set forth herein; rather these embodiments are provided so that this disclosure will be thorough and complete, and will fully convey the concept of the invention to one of ordinary skill in the art. In the drawings, like reference numerals denote like elements. Also, while describing the present invention, detailed descriptions about related well known functions or configurations that may blur the points of the present invention are omitted.

Throughout the specification, it will be understood that when an element is referred to as being "connected" to another element, it may be "directly connected" to the other element or "electrically connected" to the other element with intervening elements therebetween. It will be further understood that when a part "includes" or "comprises" an element, unless otherwise defined, the part may further include other elements, not excluding the other elements.

Hereinafter, the present disclosure will be described in detail by referring to the accompanying drawings.

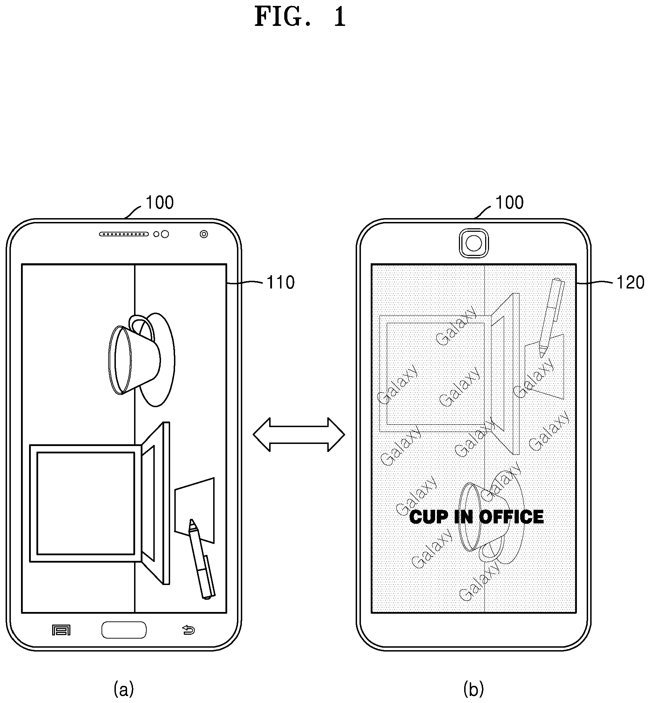

FIG. 1 shows an example in which a device 100 displays an image, remark information, and a water mark, according to an embodiment.

Referring to (a) of FIG. 1, the device 100 may display one image on a first display portion 110. The device 100 may display one image by displaying a browsing interface on the first display portion 110. The browsing interface may display the image based on an interaction between a user and the device 100.

The image may include an image currently photographed by a camera included in the device 100. The image may include an image that is photographed by the camera included in the device 100 and then stored in the device 100. The image may include other image stored in the device 100. The image may include an image presently played or displayed by using the device 100. The image may include an image received from an external device.

Referring to (b) of FIG. 1, the device 100 may display remark information related to the image illustrated in (a) of FIG. 1, on a second display portion 120. The device 100 may display the remark information by displaying a remark interface on the second display portion 120. The remark interface may display the remark information based on an interaction between a user and the device 100.

The remark information refers to information that helps a user intuitively recognize or figure out the image illustrated in (a) of FIG. 1. The remark information may be referred to as a note or notation information related to an image. Thus, the remark interface may be referred to as a memo interface or a notation interface.

The remark information may include, for example, a name of an image, a theme of an image, a location where an image is photographed (or obtained), a time when an image is photographed (or obtained), and/or information of an object included in an image. The information of an object may include, for example, personal information of a human, information of an object matter, and/or information about an animal. However, the information of an object is not limited thereto.

For example, the personal information of a human may include, but is not limited to, a name of a person, a gender of a person, and/or a relationship between a person and a user of the device 100. The information of an object matter may include, but is not limited to, a name of a building, information about a building, a relationship between a building and a user of the device 100, and/or a history of a building. The information about an animal may include, but is not limited to, a kind of an animal and/or a name of an animal.

The remark information may include a user input related to an image. The remark information may include attribute information of an image. The attribute information of an image may include, for example, metadata, such as a date of photographing, a size of an image, and/or a resolution of an image. However, the attribute information is not limited thereto. The remark information may include information (for example, global positioning system (GPS) information) that is automatically generated while an image is photographed (or obtained). The remark information may include information (for example, a name of an object that is photographed or obtained) received from the object photographed (or obtained) while an image is photographed (or obtained). The photographed object may be an internet of things (IoT) network-based device.

The remark information may be generated based on a user input. The remark information may be edited based on a user input. When the image related to the remark information is stored in the device 100, the remark information may be stored together in the device 100. The remark information may be additionally stored in the device 100, after the image related to the remark information is stored in the device 100. The remark information may be stored in a file of the image related to the remark information or a file of attribute information of the image.

The remark information may be determined by a user setting or a default setting of the device 100. For example, when the user setting or the default setting of the device 100 is based on manual manipulation, the device 100 may generate the remark information according to a manual input of the user.

Referring to (b) of FIG. 1, the device 100 may display "cup in office" on the second display portion 120 as the remark information. Accordingly, the user may easily recognize that the image illustrated in (a) of FIG. 1 is an image of a cup in an office.

Referring to (b) of FIG. 1, the device 100 may display a water mark (for example, galaxy) on the second display portion 120 together with the remark information. The water mark is to allow a user to have an experience as if the user sees a back surface of a photographing paper in a traditional picture. Referring to (b) of FIG. 1, the device 100 may display a plurality of water marks on the second display portion 120. Accordingly, in (b) of FIG. 1, it can be said that the device 100 displays a water mark pattern on the second display portion 120.

The device 100 may generate the water mark based on a user input. The user input may include a user input based on the first display portion 110 or the second display portion 120. The device 100 may edit the water mark based on the user input. The device 100 may automatically generate the water mark, when photographing or obtaining an image, according to a set environment. The device 100 may edit the water mark pattern based on a user input.

Referring to (b) of FIG. 1, the device 100 may provide a mirror image of the image displayed on the first display portion 110, via the second display portion 120. The mirror image displayed on the second display portion 120 may be an image displayed on the second display portion 120 via the device 100 or an image penetrating the second display portion 120. According to the present disclosure, the image provided based on the second display portion 120 is not limited to the mirror image. For example, the image provided based on the second display portion 120 may be the same image as the image displayed on the first display portion 110.

The device 100 may include the first display portion 110 and the second display portion 120 that are physically separated. The device 100 may include the first display portion 110 and the second display portion 120 having the same or different materials.

For example, the first display portion 110 may include a liquid crystal display (LCD), a light-emitting diode (LED), an electric ink display, a transparent electric ink display, a transparent display, or a flexible display. However, according to the present disclosure, materials of the first display portion 110 are not limited thereto.

The second display portion 120 may include a transparent display, an LCD, an LED, an electric ink display, a transparent electric ink display, or a flexible display. However, according to the present disclosure, materials of the second display portion 120 are not limited thereto.

When the second display portion 120 is the transparent display or the transparent electric ink display, the mirror image illustrated in (b) of FIG. 1 may be an image penetrating the second display portion 120.

The device 100 may include the first display portion 110 and the second display portion 120 that are logically separated. When the first display portion 110 and the second display portion 120 are logically separated, the device 100 may include one display portion. The one display portion may include the first display portion 110 and the second display portion 120.

For example, the device 100 may set an image which may be displayed on the first display portion 110 as an image page. The device 100 may set remark information which may be displayed on the second display portion 120 as a remark information page. When a user sees a front surface of the device 100, the device 100 may display the image page on the first display portion 110. When the user turns over the device 100 to a back surface thereof from a front surface thereof (for example, performs a flip screen action), the device 100 may display the remark information page on the second display portion 120. When the user turns over the device 100 from the back surface thereof to the front surface thereof, the device 100 may display the image page on the first display portion 110.

The remark information page may include the mirror image, the remark information, and the water mark pattern with respect to the image, as illustrated in (b) of FIG. 1. However, the remark information page is not limited thereto. For example, the remark information page may include the remark information. The remark information page may include the remark information and the water mark pattern. The remark information page may include the remark information and an image having the same form as the image displayed on the first display portion 110.

As described above, the first display portion 110 and the second display portion 120 included in the device 100 may be physically or logically separated. The first display portion 110 may be referred to as a first screen, and the second display portion 120 may be referred to as a second screen. The first display portion 110 may be referred to as a main display portion or a main screen of the device 100. The second display portion 120 may be referred to as a sub-display portion or a sub-screen of the device 100. The device 100 including the first display portion 110 and the second display portion 120 may be referred to as a double screen device.

The device 100 may control the physically separated first display portion 110 and second display portion 120 or operate the logically separated first display portion 110 and second display portion 120, by using a general purpose hardware processor, such as a digital signal processor (DSP) and a field programmable gate array (FPGA), or a special purpose hardware processor, such as an exclusive chip.

The device 100 may control the physically separated first display portion 110 and second display portion 120 or operate the logically separated first display portion 110 and second display portion 120, based on software using a computer program, such as an application for watching an image installed in the device 100.

The device 100 may include a mobile communication device, a tablet personal computer (PC), a game console, or a digital multimedia player. However, according to the present disclosure, the device 100 is not limited thereto.

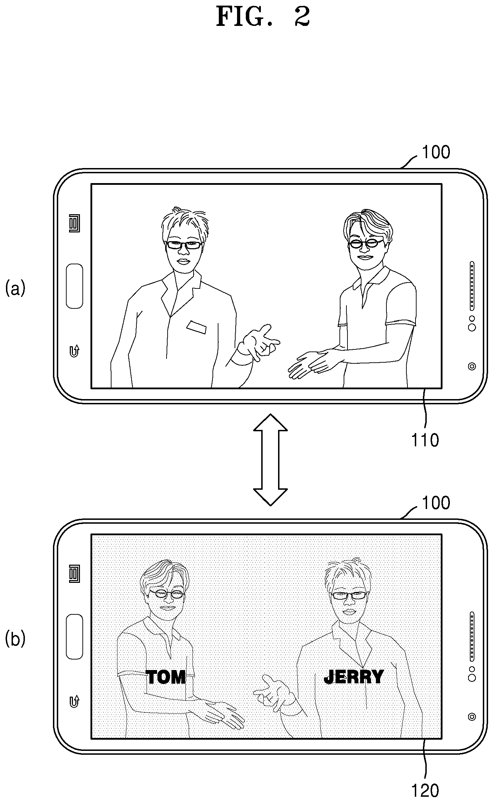

FIG. 2 shows an example in which the device 100 displays an image and remark information, according to an embodiment.

In FIG. 2, the device 100 may provide the remark information for a unit of an object included in the image. Referring to (a) of FIG. 2, the device 100 may display one image including a plurality of objects on the first display portion 110. The device 100 may display a browsing interface on the first display portion 110 and may display the image based on the displayed browsing interface.

Referring to (b) of FIG. 2, the device 100 may display the remark information for the unit of the object included in the image displayed on the first display portion 110, on the second display portion 120. The device 100 may display a remark interface on the second display portion 120 and may display the remark information based on the displayed remark interface. Accordingly, a user may rapidly recognize the objects included in the image. Thus, the remark information may be referred to as information helping a user intuitively recognize or understand an image, as described above. However, the remark information may also be referred to as information helping a user intuitively recognize or understand the image or an object included in the image.

When the remark information is provided for the unit of the object included in the image, the device 100 may determine a display location of the remark information according to display locations of the plurality of objects included in one image displayed on the first display portion 110. Here, the remark information may be referred to as remark information related to the objects included in the image.

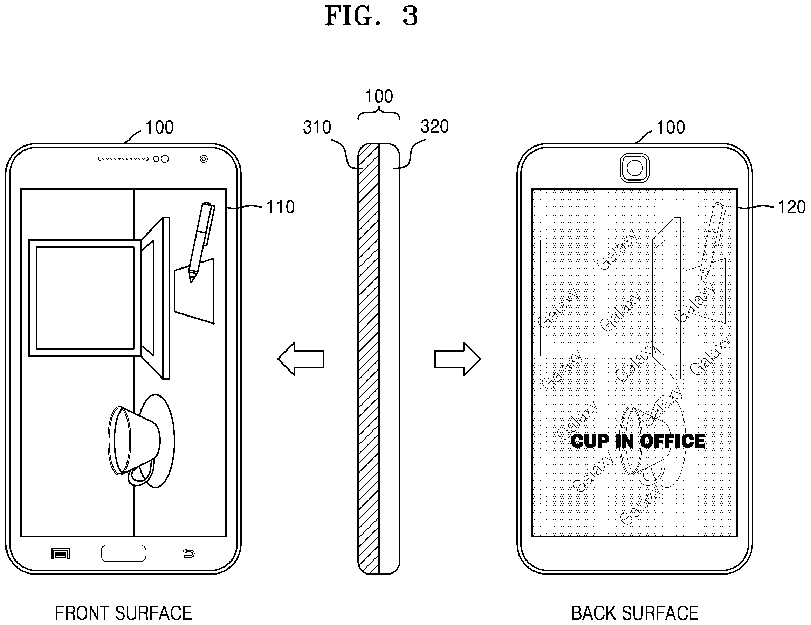

FIG. 3 shows an example of the first display portion 110 and the second display portion 120 included in the device 100, according to an embodiment.

Referring to FIG. 3, the device 100 may mount the first display portion 110 on a front surface 310 of the device 100. The device 100 may mount the second display portion 120 on a back surface 320 of the device 100. In FIG. 3, the device 100 includes the first display portion 110 and the second display portion 120, back surfaces of which contact each other.

When the device 100 includes the first display portion 110 and the second display portion 120 that are separated, as illustrated in FIG. 3, the device 100 may selectively display an image and remark information according to whether a flip screen action of the device 100 takes place or not.

The flip screen action refers to an action in which the device 100 is turned over. That is, the flip screen action refers to an action of turning over the device 100 such that the device 100 is changed from a state in which the first display portion 110 thereof is on the second display portion 120 thereof to a state in which the second display portion 120 thereof is on the first display portion 110 thereof. Alternatively, the flip screen action refers to an action of turning over the device 100 such that the device 100 is changed from a state in which the second display portion 120 thereof is on the first display portion 110 thereof to a state in which the first display portion 110 thereof is on the second display portion 120 thereof.

When the first display portion 110 is on the second display portion 120, the device 100 may display the image. Here, the second display portion 120 may display the remark information or may not display the remark information. When the second display portion 120 does not display the remark information, the device 100 may stop power supply to the second display portion 120 or set a lower power mode for the second display portion 120. Here, the second display portion 120 may be an LCD or an LED. However, according to the present disclosure, materials of the second display portion 120 are not limited thereto.

When the second display portion 120 is on the first display portion 110, the device 100 may display the remark information. Here, the first display portion 110 may or may not display the image. When the first display portion 110 does not display the image, the device 100 may stop power supply to the first display portion 110 or may set a low power mode for the first display portion 110. Here, the first display portion 110 may be an LCD or an LED. However, according to the present disclosure, materials of the first display portion 110 are not limited thereto.

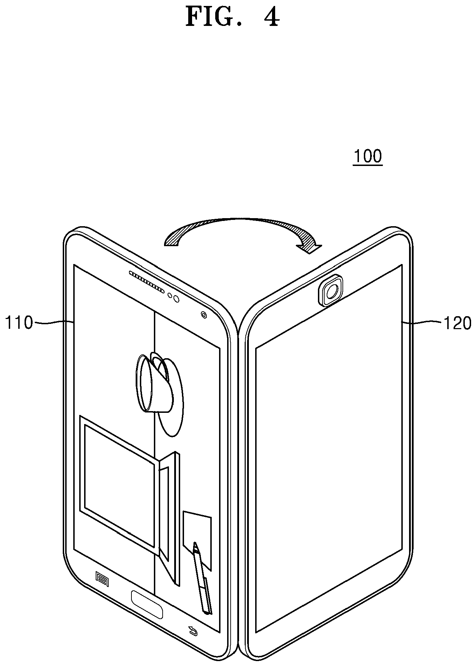

FIG. 4 shows an example of the first display portion 110 and the second display portion 120 included in the device 100, according to an embodiment. Referring to FIG. 4, the device 100 may be folded such that back surfaces of the first display portion 110 and the second display portion 120 contact each other.

When it is sensed that the device 100 is folded as illustrated in FIG. 4, the device 100 may display the remark information on the second display portion 120. When it is not sensed that the device 100 is folded as described above, the device 100 may not display the remark information on the second display portion 120. When the second display portion 120 does not display the remark information, the device 100 may display other information on the second display portion 120. When the second display portion 120 does not display the remark information, the device 100 may block power supply to the second display portion 120 or set a lower power mode for the second display portion 120.

The device 100 may maintain the second display portion 120 to be non-transparent, when it is not sensed that the device 100 is folded as illustrated in FIG. 4. When it is sensed that the device 100 is folded as illustrated in FIG. 4, the device 100 may change the second display portion 120 from the non-transparent state to a transparent state. Accordingly, the second display portion 120 may display a mirror image of the image displayed on the first display portion 110. Here, for the image displayed on the first display portion 110 to penetrate the second display portion 120, the first display portion 110 and the second display portion 120 may be a transparent display or a transparent electric ink display. For example, the first display portion 110 may be a transparent display and the second display portion 120 may be a transparent electric ink display.

When it is sensed that the device 100 is folded as illustrated in FIG. 4, it can be said that the first display portion 110 is located at a front surface of the device 100 and the second display portion 120 is located at a back surface of the device 100. Accordingly, the user may fold the device 100 as illustrated in FIG. 4 to have the experience as if the user enjoys a traditional picture.

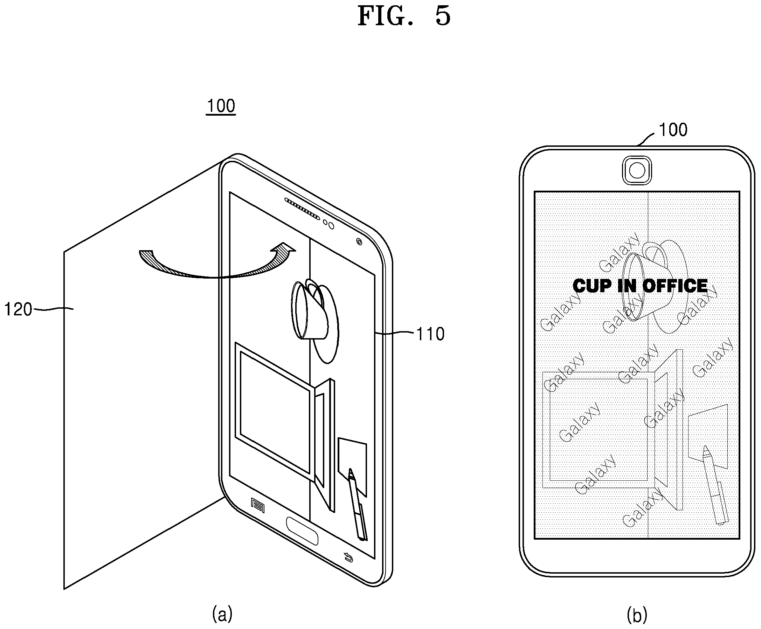

FIG. 5 shows an example of the first display portion 110 and the second display portion 120 included in the device 100, according to an embodiment. Referring to FIG. 5, the device 100 may be folded such that front surfaces of the first display portion 110 and the second display portion 120 contact each other.

When it is sensed that the device 100 is folded as illustrated in (a) of FIG. 5, the device 100 may display the remark information on the second display portion 120. Accordingly, the device 100 may display on the second display portion 120 an image having the same form as the image displayed on the first display portion 110, as illustrated in (b) of FIG. 5. The image displayed on the second display portion 120 may be an image that has penetrated the second display portion 120. Here, the first display portion 110 may be a non-transparent display, such as an LCD or an LED, and the second display portion 120 may be a transparent display or a transparent electric ink display.

Sensing whether the device 100 is folded as illustrated in FIGS. 4 and 5 may be performed by using a proximity sensor or a touch sensor mounted in the device 100 based on a direction in which the device 100 is folded. However, according to the present disclosure, the sensing whether the device 100 is folded is not limited thereto.

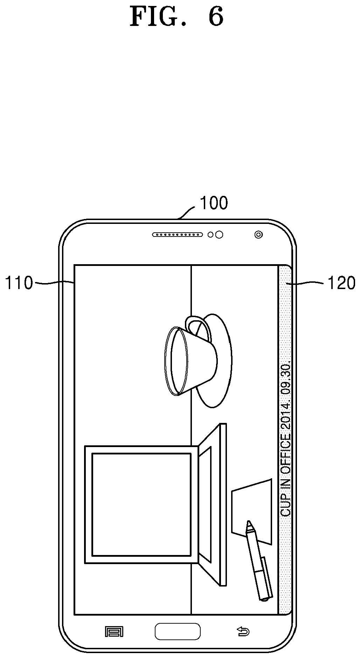

FIG. 6 shows an example of the first display portion 110 and the second display portion 120 included in the device 100, according to an embodiment. Referring to FIG. 6, the device 100 may include the first display portion 110 and the second display portion 120, which are arranged in parallel.

Referring to FIG. 6, the device 100 may include the second display portion 120 located at a bending portion (or an edge) that is curved in a certain direction (for example, a downward direction) along a surface (for example, a long surface) of the first display portion 110.

When the device 100 includes the first display portion 110 and the second display portion 120 as illustrated in FIG. 6, the device 100 may display only remark information on the second display portion 120. When there are a plurality of pieces of remark information, the device 100 may display the plurality of pieces of remark information on the second display portion 120 by moving the remark information based on a user input based on the second display portion 120. The user input may include a touch-based user input indicating a movement in an up and down direction or a left and right direction.

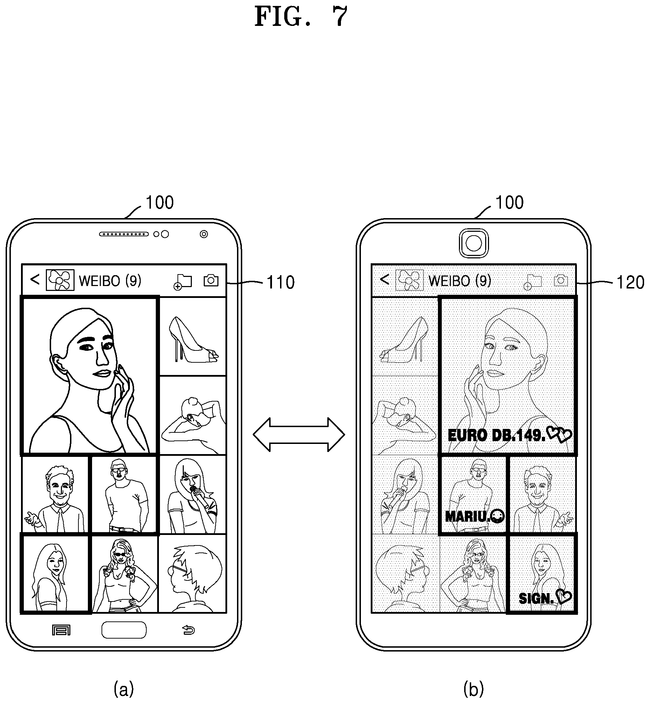

FIG. 7 shows an example of the first display portion 110 and the second display portion 120 included in the device 100, according to an embodiment. Referring to (a) of FIG. 7, the device 100 may display a plurality of images on the first display portion 110. Referring to (b) of FIG. 7, the device 100 may display remark information related to some images of the plurality of images displayed on the first display portion 110, on the second display portion 120.

In (b) of FIG. 7, the image indicating no remark information displayed on the second display portion 120 is an image having no remark information. Referring to (b) of FIG. 7, the second display portion 120 may display mirror images corresponding to the plurality of images displayed on the first display portion 110 in a background of the remark information.

Referring to (a) of FIG. 7, the device 100 may highlight frames of some images of the plurality of images displayed on the first display portion 110. The frames of some images are highlighted to mark the images having the remark information. That is, images without highlighted frames are images having no remark information.

Methods of marking the image having the remark information are not limited to highlighting the frame of the image as described above.

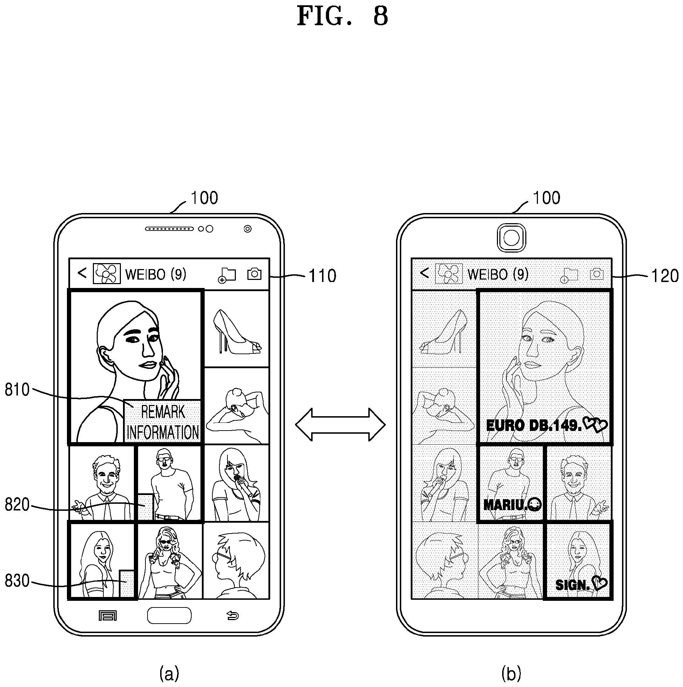

FIG. 8 shows an example of the first display portion 110 and the second display portion 120 included in the device 100, according to an embodiment.

Referring to (a) of FIG. 8, the device 100 may display a remark information display button 810 or symbols 820 and 830 corresponding thereto, on an image having remark information from among a plurality of images displayed on the first display portion 110. A user may intuitively recognize the image having remark information based on the remark information display button 810 or the symbols 820 and 830 corresponding thereto, which are displayed on the first display portion 110.

When a user input for selecting to see remark information of the image including the remark information display button 810 is received in (a) of FIG. 8, the device 100 may display only the remark information related to the image including the remark information display button 810 on the second display portion 120, as illustrated in (b) of FIG. 8. The user input may include a touch-based tap with respect to the remark information display button 810. However, user inputs are not limited thereto in the present disclosure. The second display portion 120 may display the image displayed on the first display portion 110 as a background of the remark information. The image displayed on the second display portion 120 is a mirror image. The image displayed on the second display portion 120 may be an image penetrating the second display portion 120. The device 100 may further display a water mark pattern on the second display portion 120. Accordingly, the user may have the experience as if the user sees a back surface of a traditional photograph.

In the present disclosure, the image displayed on the first display portion 110 of the device 100 and the remark information displayed on the second display portion 120 of the device 100 are not limited to the embodiments described by referring to FIGS. 1 through 8.

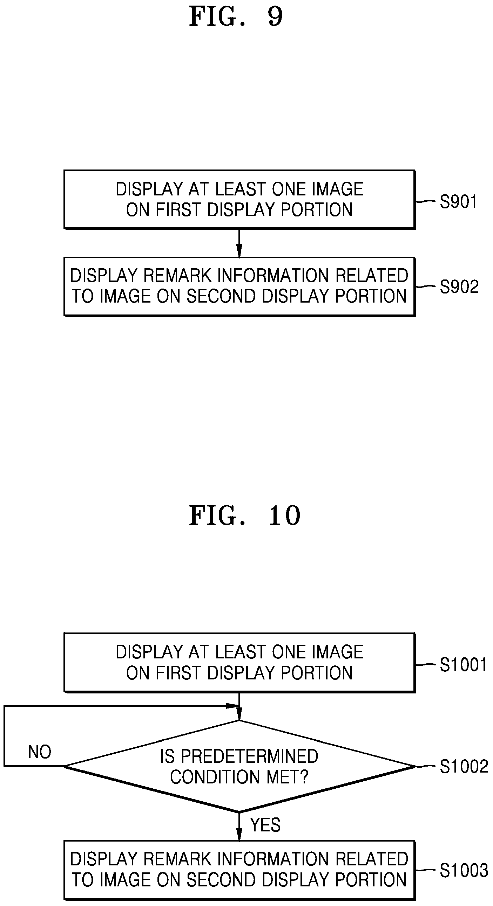

FIG. 9 is an operational flowchart of a method of providing remark information related to an image, the method being performed by the device 100, according to an embodiment. The method may be realized by a computer program. For example, the method may be performed by an application for seeing an image installed in the device 100. The computer program may operate in an operation system installed in the device 100. The device 100 may use the computer program by writing the computer program to a storage medium and by reading the computer program from the storage medium.

Referring to FIG. 9, the device 100 may display at least one image on the first display portion 110, in operation S901. The device 100 may display the at least one image on the first display portion 110 based on a user input. The device 100 may display an image obtained based on a photographing operation using a camera included in the device 100, on the first display portion 110. The device 100 may display an image received from an external device on the first display portion 110.

In operation S902, the device 100 may display the remark information related to the image displayed on the first display portion 110 on the second display portion 120. When the image is displayed on the first display portion 110 and there is remark information related to the image displayed on the first display portion 110, the device 100 may automatically display the remark information on the second display portion 120. Accordingly, the user may see the image along with the remark information related to the image, displayed on the device 100, and thus, the user may easily and quickly recognize the image displayed on the first display portion 110.

In operation S902, when the remark information is displayed on the second display portion 120, the device 100 may determine a display location of the remark information based on a display location of the image displayed on the first display portion 110.

For example, the device 100 may determine the display location of the remark information, such that the remark information is displayed on a display location of the second display portion 120, which corresponds to the display location of the image displayed on the first display portion 110. Accordingly, when the image is displayed on the first display portion 110 as illustrated in FIG. 1, the device 100 may display the remark information, "cup in office," at the display location of the second display location 120, which corresponds to a display location of the cup displayed on the first display portion 110.

Also, as illustrated in (a) of FIG. 7, when the plurality of images are displayed on the first display portion 110, the device 100 may display the remark information on the second display portion 120, based on display locations of the images having remark information from among the plurality of images.

FIG. 10 is an operational flowchart of a method of providing remark information related to an image, via the device 100, according to an embodiment. The method may be realized by a computer program. For example, the method may be performed by an application for seeing an image installed in the device 100. The computer program may operate in an operation system installed in the device 100. The device 100 may use the computer program by writing the computer program to a storage medium and by reading the computer program from the storage medium.

Referring to FIG. 10, the device 100 may display at least one image on the first display portion 110 in operation S1001. The device 100 may display the at least one image on the first display portion 110 based on a user input. The device 100 may display an image obtained based on a photographing operation using a camera included in the device 100, on the first display portion 110. The device 100 may display an image received from an external device on the first display portion 110.

The device 100 may check whether a predetermined condition is met, in operation S1002. The predetermined condition refers to a condition for displaying the remark information related to the image displayed on the first display portion 110.

The predetermined condition may relate to, for example, sensing whether a predetermined action is performed by a user in the device 100, sensing whether a predetermined operation is performed by a user in the device 100 while at least one image is displayed on the first display portion 110, and/or detecting whether the device 100 is set for displaying remark information.

The predetermined action may include a flip screen action. As described in FIG. 2, the flip screen action may include an action in which the device 100 is turned over from a state in which the display portion 110 thereof is over the second display portion 120 thereof to a state in which the first display portion 110 thereof is under the second display portion 120 thereof. Also, the flip screen action may include an action in which the device 100 is turned over from a state in which the second display portion 120 thereof is over the first display portion 110 thereof to a state in which the second display portion 120 thereof is under the first display portion 110 thereof. However, in the present disclosure, the predetermined action is not limited to the flip screen action.

The predetermined operation may include tapping at least one of the remark information display button 810 and the remark display symbols 820 and 830, displayed on the first display portion 110, as described by referring to (a) of FIG. 8. However, in the present disclosure, the predetermined operation is not limited thereto.

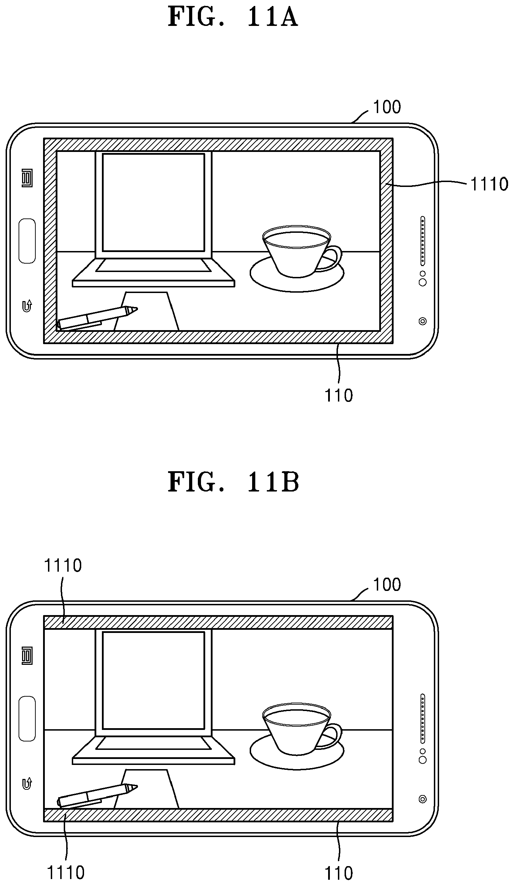

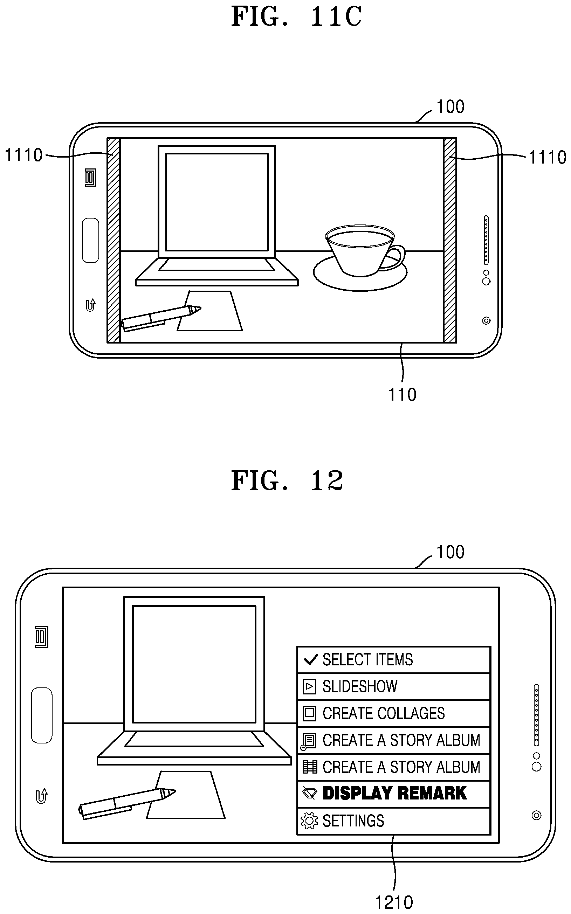

FIGS. 11A, 11B, and 11C show examples in which the device 100 performs a predetermined operation based on a mark 1110 displayed on the first display portion 110, according to embodiments.

Referring to FIG. 11A, the device 100 may display the mark 1110 indicating that an image displayed on the first display portion 110 has remark information. The mark 1110 illustrated in FIG. 11A is located on a frame of the image displayed on the first display portion 110. The mark 1110 illustrated in FIG. 11A may be provided in the form of flickering for a predetermined period of time. The mark 1110 illustrated in FIG. 11A may be displayed in the form of a highlight. A user may intuitively figure out that the user may see the remark information related to the image displayed on the first display portion 110, based on the mark 1110.

According to the present disclosure, the display form of the mark 1110 is not limited to the forms described in FIG. 11A. The mark 1110 may be located at a portion of a frame of the image displayed on the first display portion 110. For example, the device 100 may display the mark 1110 at an upper side and a lower side of the frame of the image, as illustrated in FIG. 11B. Also, the device 100 may display the mark 1110 at a left side and a right side of the frame of the image, as illustrated in FIG. 11C.

Also, the device 100 may display the mark 1110 at the upper side, the lower side, the left side, or the right side of the frame of the image displayed on the first display portion 110.

The predetermined operation may include a touch-based input (for example, long tapping) based on the mark 1110 illustrated in FIGS. 11A, 11B, and 11C. That is, when a touch-based input based on the mark 1110 illustrated in FIGS. 11A, 11B, and 11C is received, the device 100 may display the remark information as illustrated in (b) of FIG. 1, on the second display portion 120. The predetermined operation may include a touch-based input (for example, swiping) with respect to the image displayed on the first display portion 110, when the mark 1110 is displayed as one shown in FIGS. 11A, 11B, and 11C.

FIG. 12 shows an example of setting the device 100 for displaying remark information, according to an embodiment. Referring to FIG. 12, the device 100 may receive a user input requesting a menu, when one image is displayed on the first display portion 110. When the user input requesting a menu is received, the device 100 may display a menu window 1210 on a portion of the first display portion 110. When a remark information display item is selected from menu items included in the menu window 1210, the device 100 is set for displaying the remark information.

If the predetermined condition in operation S1002 of FIG. 10 is the predetermined action, the device 100 may display the remark information related to the image displayed on the first display portion 110 on the second display portion 120 in operation S1003, when the predetermined action is sensed.

If the predetermined condition in operation S1002 of FIG. 10 is the predetermined operation, the device 100 may display the remark information related to the image displayed on the first display portion 110 on the second display portion 120 in operation S1003, when the predetermined operation is sensed when the image is displayed on the first display portion 110.

If the predetermined condition in operation S1002 relates to a condition in which the device 100 is set for displaying remark information, the device 100 may display the remark information related to the image displayed on the first display portion 110 on the second display portion 120 in operation S1003, when it is sensed that the device 100 is set for displaying remark information.

If the predetermined condition in operation S1002 includes the predetermined action and the condition in which the device 100 is set for displaying remark information, the device 100 may perform operation S1003 based on a result of sensing whether the device 100 is set for displaying remark information, after the predetermined action is sensed.

If the predetermined condition in operation S1002 includes the predetermined operation and the condition in which the device 100 is set for displaying remark information, the device 100 may perform operation S1003 based on a result of sensing whether the device 100 is set for displaying remark information, after the predetermined operation is sensed.

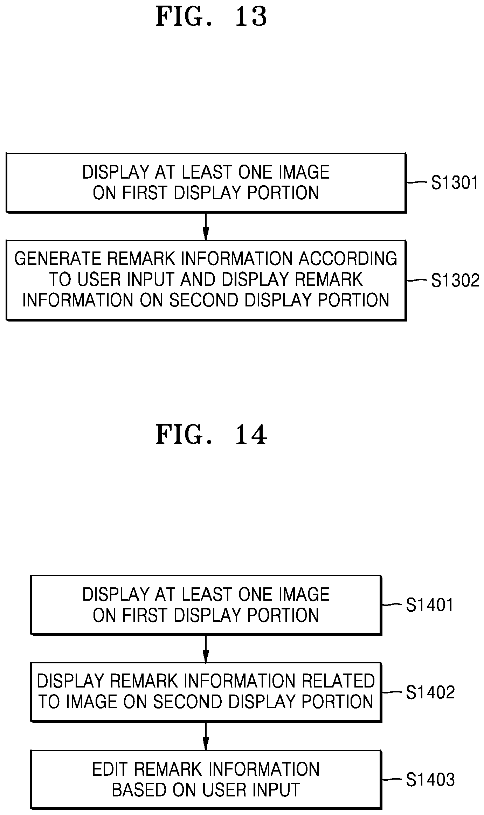

FIG. 13 is an operational flowchart of a method of providing remark information related to an image, via the device 100, according to an embodiment. The method may be realized by a computer program. For example, the method may be performed by an application for seeing an image installed in the device 100. The computer program may operate in an operations system installed in the device 100. The device 100 may use the computer program by writing the computer program to a storage medium and by reading the computer program from the storage medium.

Referring to FIG. 13, the device 100 may display at least one image on the first display portion 110 in operation S1301. The device 100 may display the at least one image on the first display portion 110 based on a user input. The device 100 may display an image obtained based on a photographing operation using a camera included in the device 100 on the first display portion 110. The device 100 may display an image received from an external device on the first display portion 110.

When the device 100 receives a user input based on the first display portion 110, the device 100 may generate remark information related to the image displayed on the first display portion 110 in response to the received user input and display the remark information on the second display portion 120, in operation S1302. The user input may include a user input indicating a request to generate the remark information related to the image displayed on the first display portion 110, a user input (a text, a special symbol, and/or an emoticon) indicating the remark information to be generated.

When a user input indicating a request to store the remark information displayed on the second display portion 120 is received, the device 100 may store the remark information displayed on the second display portion 120 as the remark information related to the image displayed on the first display portion 110.

FIG. 14 is an operational flowchart of a method of providing remark information related to an image, via the device 100, according to an embodiment. The method may be realized by a computer program. For example, the method may be performed by an application for seeing an image installed in the device 100. The computer program may operate in an operations system installed in the device 100. The device 100 may use the computer program by writing the computer program to a storage medium and reading the computer program from the storage medium.

Referring to FIG. 14, the device 100 may display at least one image on the first display portion 110 in operation S1401. The device 100 may display the at least one image on the first display portion 110 based on a user input. The device 100 may display an image obtained based on a photographing operation using a camera included in the device 100 on the first display portion 110. The device 100 may display an image received from an external device on the first display portion 110.

In operation S1402, the device 100 may display remark information related to the image displayed on the first display portion 110 on the second display portion 120. As shown in FIG. 9, the device 100 may display the image on the first display portion 110 and at the same time, display the remark information related to the image on the second display portion 120. Here, when the image displayed on the first display portion 110 does not have remark information related to the image, the device 100 may display a notification message that there is no remark information related to the image, on the second display portion 120.

In operation S1402, the device 100 may display the remark information related to the image displayed on the first display portion 110 on the second display portion 120, according to whether the predetermined condition, which is set as described in FIG. 10, is met.

In operation S1403, the device 100 may edit the remark information based on a user input. For example, when the remark information is displayed as shown in (b) of FIG. 1, when a long touch is given to the remark information or a touch & drag is performed on a screen of the second display portion 120, the device 100 may provide an edit window for editing the remark information. The device 100 may edit the remark information according to a user input received based on the provided edit window. The edit window may be separated from the remark information page displayed on the second display portion 120. The provided edit window may be provided by including the remark information currently displayed.

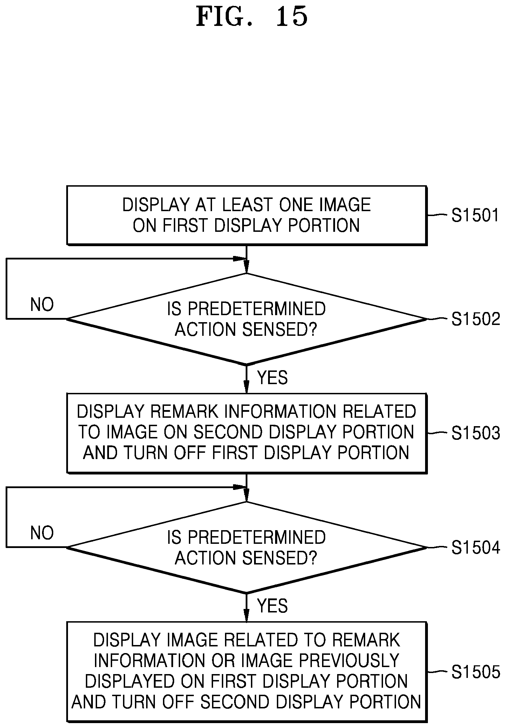

FIG. 15 is an operational flowchart of a method of providing remark information related to an image, via the device 100, according to an embodiment. The method may be realized by a computer program. For example, the method may be performed by an application for seeing an image installed in the device 100. The computer program may operate in an operations system installed in the device 100. The device 100 may use the computer program by writing the computer program to a storage medium and by reading the computer program from the storage medium.

Referring to FIG. 15, the device 100 may display at least one image on the first display portion 110 in operation S1501. The device 100 may display the at least one image on the first display portion 110 based on a user input. The device 100 may display an image obtained based on a photographing operation using a camera included in the device 100 on the first display portion 110. The device 100 may display an image received from an external device on the first display portion 110.

In operation S1502, the device 100 may determine whether a predetermined action is sensed. The predetermined action may include the flip screen action described in FIG. 2. However, the predetermine action is not limited thereto.

When the predetermined action is sensed, the device 100 may display the remark information related to the image, on the second display portion 120, and may turn off the first display portion 110, in operation S1503.

When the predetermined action is sensed in operation S1504, the device 100 may display an image related to the image of which the remark information is displayed on the second display portion 120, on the first display portion 110, and turn off the second display portion 120.

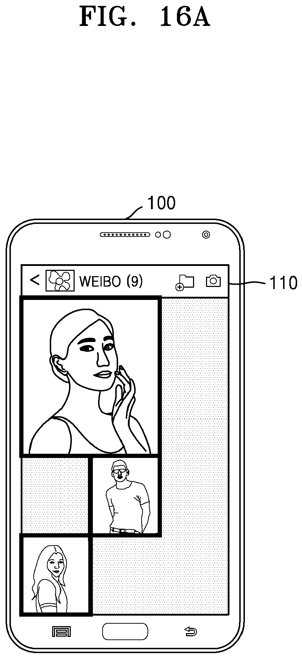

FIGS. 16A through 16C show an example in which the device 100 displays a plurality of images on the first display portion 110 and some of the plurality of displayed images have remark information related to the images.

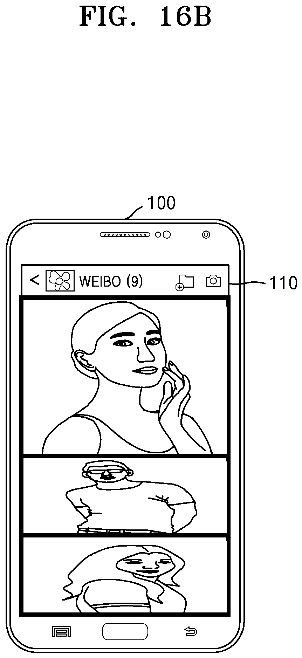

When the device 100 displays the plurality of images on the first display portion 110 as illustrated in (a) of FIG. 7, and some of the plurality of displayed images have the remark information related to the images, the device 100 may display the images having the remark information on the first display portion 110 as they are, as illustrated in FIG. 16A, and display the other images by blocking the other images, when the predetermined action is sensed in operation S1504. Alternatively, the device 100 may display an image including only the images having the remark information on the first display portion 110, as illustrated in FIG. 16B.

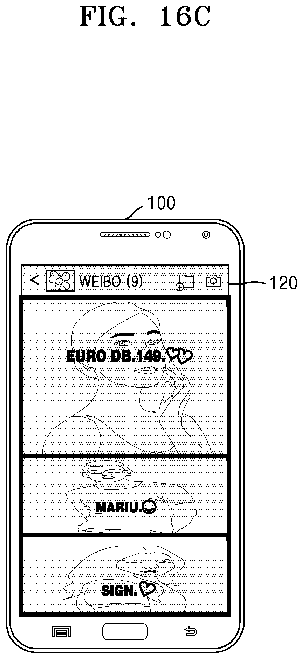

When the device 100 displays the image on the first display portion 110 as illustrated in FIG. 16B, when the predetermined action is sensed, the device 100 may display the remark information related to the image, on the second display portion 120, as illustrated in FIG. 16C.

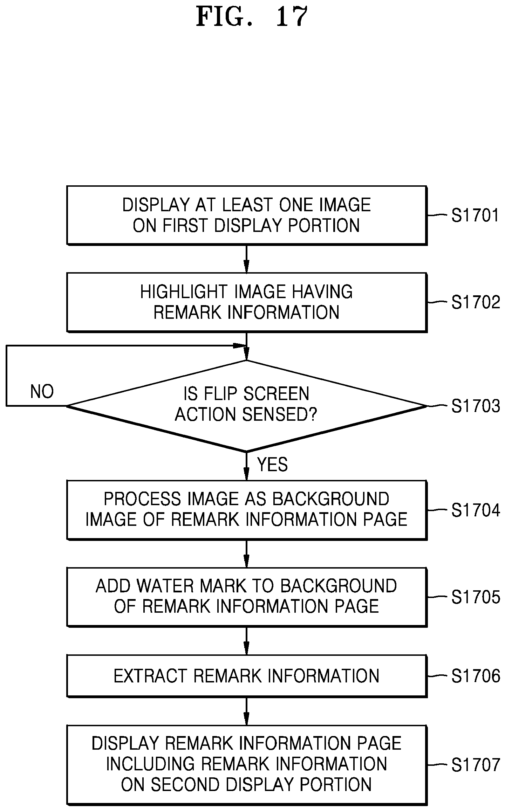

FIG. 17 is an operational flowchart of a method of providing remark information related to an image, via the device 100, according to an embodiment. The method may be realized by a computer program. For example, the method may be performed by an application for seeing an image installed in the device 100. The computer program may operate in an operations system installed in the device 100. The device 100 may use the computer program by writing the computer program to a storage medium and by reading the computer program from the storage medium.

Referring to FIG. 17, the device 100 may display at least one image on the first display portion 110 in operation S1701. The device 100 may display the at least one image on the first display portion 110 based on a user input. The device 100 may display an image obtained based on a photographing operation using a camera included in the device 100 on the first display portion 110. The device 100 may display an image received from an external device on the first display portion 110.

In operation S1702, the device 100 may highlight an image having remark information from among images displayed on the first display portion 110.

When the device 100 senses a flip screen action in operation S1703, the device 100 may process the image displayed on the first display portion 110 as a background image of a remark information page, in operation S1704. The device 100 may add a water mark to the background of the remark information page in operation S1705. The device 100 may add the water mark to a layer that is upper than that of the image.

The device 100 may extract the remark information related to the image displayed on the first display portion 110 in operation S1706. For example, the device 100 may extract the remark information by using identification information of the image displayed on the first display portion 110. The remark information may be stored in the device 100, or in an external device.

The device 100 may display the remark information page including the remark information on the second display portion 120, in operation S1707. The remark information page displayed in operation S1707 may include the image displayed on the first display portion 110, the water mark, and the remark information. The image included in the remark information page may be a mirror image of the image displayed on the first display portion 110.

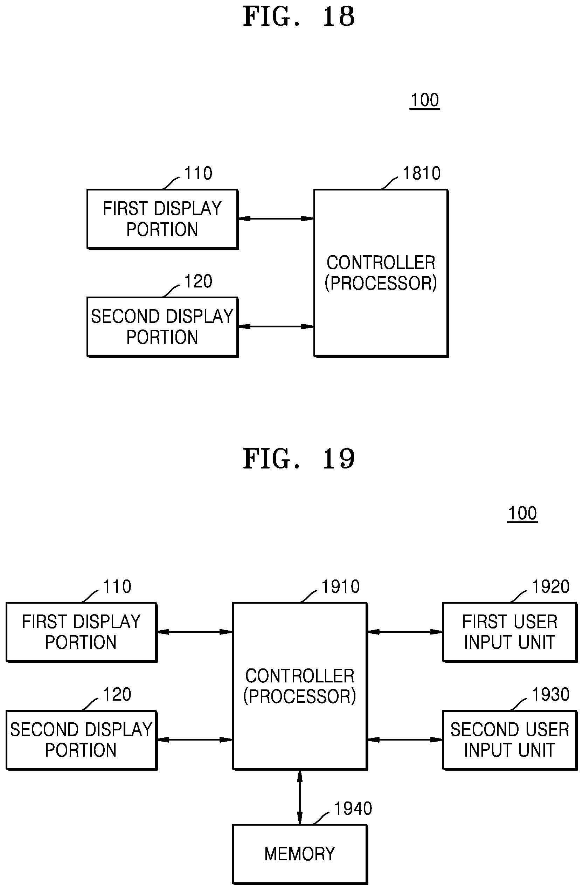

FIG. 18 is a functional block diagram of the device 100 according to an embodiment. Referring to FIG. 18, the device 100 may include the first display portion 110, the second display portion 120, and a controller 1810.

The first display portion 110 is a main display portion of the device 100. The second display portion 120 is a sub-display portion of the device 100. Accordingly, the device 100 may be referred to as a double screen device. The first display portion 110 and the second display portion 120 may be physically or logically separated as described with reference to FIGS. 2 through 8.

The first display portion 110 may be controlled by the controller 1810 to display at least one image. The first display portion 110 may be controlled by the controller 1810 to highlight the displayed image or a frame of the displayed image. The first display portion 110 and the second display portion 120 may include the materials described in FIG. 1. The first display portion 110 and the second display portion 120 may include the same or different materials.

The second display portion 120 may be controlled by the controller 1810 to display at least one piece of remark information related to the image displayed on the first display portion 110. The second display portion 120 may display an image having the same form as the image displayed on the first display portion 110 as a background image of the remark information. The second display portion 120 may display a mirror image of the image displayed on the first display portion 110 as the background image of the remark information.

The second display portion 120 may display at least one water mark or water mark pattern as the background image of the remark information.

The controller 1810 may include a processor or hardware controlling the whole function of the device 100. The controller 1810 may control operations of the device 100 based on the operation system installed in the device 100. The controller 1810 may control the first display portion 110 and the second display portion 120 based on the operation system installed in the device 100.

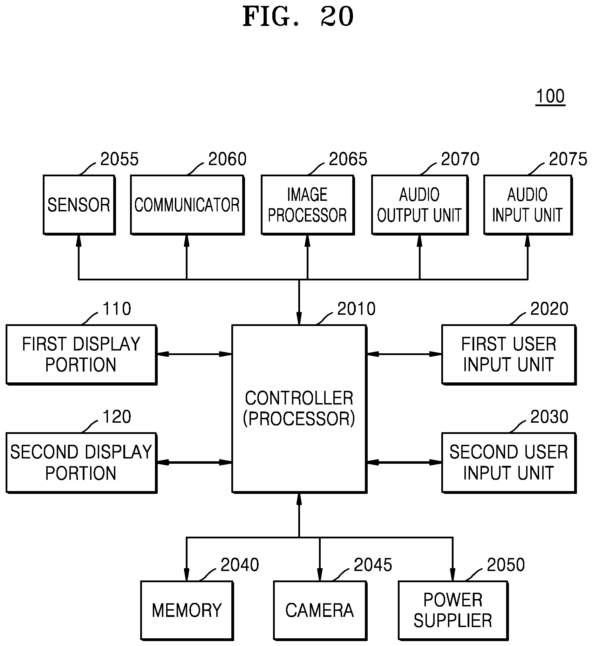

Not all components illustrated in FIG. 18 are essential components of the device 100. The device 100 may include more or less than the components illustrated in FIG. 18. For example, the device 100 may include components illustrated in FIG. 19 or 20. Also, the device 100 may include one display portion including the first display portion 110 and the second display portion 120.

FIG. 19 is a functional block diagram of the device 100 according to an embodiment. Referring to FIG. 19, the device 100 may include the first display portion 110, the second display portion 120, a controller 1910, a first user input unit 1920, a second user input unit 1930, and a memory 1940.

Referring to FIG. 19, the first user input unit 1920 may include a touch panel coupled to a front surface of the first display portion 110. The second user input unit 1930 may include a touch panel coupled to a front surface of the second display portion 120.

Referring to FIG. 19, the device 100 may include the first user input unit 1920 and the second user input unit 1930 corresponding to a structure of the first display portion 110 and the second display portion 120. For example, when the first display portion 110 and the second display portion 120 are physically separated, the device 100 may include the first user input unit 1920 and the second user input unit 1930 that are physically separated. When the first display portion 110 and the second display portion 120 are logically separated, the device 100 may include the first user input unit 1920 and the second user input unit 1930 that are logically separated.

The first user input unit 1920 may receive a user input based on the first display portion 110. The first user input unit 1920 may receive the user input based on a browsing interface displayed on the first display portion 110.

The second user input unit 1930 may receive a user input based on the second display portion 120. The second user input unit 1930 may receive the user input based on a remark interface displayed on the second display portion 120.

Each of the first user input unit 1920 and the second user input unit 1930 may receive a touch-based input. The first user input unit 1920 and the second user input unit 1930 may include, for example, at least one of a key pad, a dome switch, a touch pad (a touch-type capacitance method, a pressure-type resistive method, an infrared sensing method, a surface ultrasonic conductive method, an integral tension measuring method, a piezo effect method, etc.), a jog wheel, and a jog switch. However, according to the present disclosure, the first user input unit 1920 and the second user input unit 1930 are not limited thereto.

Each of the first user input unit 1920 and the second user input unit 1930 may receive at least one of a touch-based user input, a movement-based user input, a vision-based user input, and a user voice-based user input. However, according to the present disclosure, the user input is not limited thereto.

The touch-based user input may include, for example, tapping (or touching), long tapping (or touching), touching and holding, touching and dragging, double tapping, dragging, panning, flicking, dragging and dropping, or sweeping. However, according to the present disclosure, the touch-based user input is not limited thereto.

The movement-based user input may include, for example, a user input based on a user gesture (for example, device shaking, device rotating, device lifting, etc.) with respect to the movement of the device 100. However, according to the present disclosure, the movement-based user input is not limited thereto.

The vision-based user input may include, for example, a user input recognized by analyzing an input image obtained by a camera (not shown) included in the device 100 without a contact between the device 100 and the user. However, according to the present disclosure, the vision-based user input is not limited thereto.

The controller 1910 refers to a processor controlling operations of the device 100, like the controller 1810 of FIG. 18. The controller 1910 may operate by loading a program (or a computer program) for executing the method of providing the remark information related to the image according to the embodiments, the program (or the computer program) being stored in the memory 1940. The program may be executed based on an operating system (OS) stored in the memory 1940.

The controller 1910 may update the program for executing the method of providing the remark information related to the image according to the embodiments, the program being stored in the memory 1940.

The controller 1910 may display at least one image on the first display portion 110, according to the method of providing the remark information related to the image according to the embodiments. The controller 1910 may display the remark information related to the image on the second display portion 120, according to the method according to the embodiments. The controller 1910 may generate or edit the remark information according to a user input received based on at least one of the first user input unit 1920 and the second user input unit 1930.

The controller 1910 may control operations of the device 100 according to the methods described with reference to the flowcharts illustrated in FIG. 9, 10, 13, 14, 15, or 17.

The memory 1940 may store the program for the processing and controlling of the controller 1910. The program stored in the memory 1940 may include an OS program and various application programs. Various application programs may include applications (for example, image watch applications) for executing the method of providing the remark information related to the image according to the embodiments. However, according to the present disclosure, the application is not limited thereto.

The memory 1940 may store information managed by the application program. For example, the memory 1940 may store at least one image, which may be displayed on the first display portion 110, and at least one piece of remark information related to the image, which may be displayed on the second display portion 120. The memory 1940 may store the image and the remark information so that the image and the remark information may be read together via the controller 1910.

The memory 1940 may include at least one type of storage medium from among a flash memory type, a hard disk type, a multimedia card micro type, a card type (for example, SD or XD memory), random access memory (RAM), static random access memory (SRAM), read-only memory (ROM), electrically erasable programmable read-only memory (EEPROM), programmable read-only memory (PROM), magnetic memory, magnetic disk, and optical disk.

FIG. 20 is a functional block diagram of the device 100 according to an embodiment. Referring to FIG. 20, the device 100 may include the first display portion 110, the second display portion 120, a controller 2010, a first user input unit 2020, a second user input unit 2030, a memory 2040, a camera 2045, a power supplier 2050, a sensor 2055, a communicator 2060, an image processor 2065, an audio output unit 2070, and an audio input unit 2075.

The first display portion 110 may display at least one image by being controlled by the controller 2010. The second display portion 120 may display at least one piece of remark information related to at least one image displayed on the first display portion 110, by being controlled by the controller 2010.

The first user input unit 2020 may receive a user input based on the first display portion 110. The second user input unit 2030 may receive a user input based on the second display portion 120. The memory 2040 may have the same structure as the memory 1940 described with reference to FIG. 19 and may store the same information as the memory 1940.

The camera 2045 may photograph at least one image that may be displayed on the first display portion 110. The camera 2045 may obtain an image frame, such as a still image or a video, via an image sensor, in a video call mode or a photographing mode. The camera 2045 may obtain an image of a finger gesture of a user of the device 100 and transmit the obtained image to the controller 2010.

The controller 2010 may display at least one image on the first display portion 110 based on the image of the finger gesture of the user. The controller 2010 may display remark information related to the at least one image displayed on the first display portion 110 based on the image of the finger gesture of the user, on the second display portion 120. The controller 2010 may generate or edit the remark information based on the image of the finger gesture of the user.

According to the present disclosure, the image of the finger gesture of the user is not limited to being used to determine whether the user input is received or not. The image captured via the image sensor may be processed by the controller 2010 or an additional image processor 2065.

The image frame processed by the camera 2045 may be stored in the memory 2040 or transmitted to the outside via the communicator 2060. The camera 2045 may be changed into at least two cameras according to an embodiment of the device 100.

The power supplier 2050 may supply power to all components included in the device 100. The power supplier 2050 may be controlled by the controller 2010 and may selectively supply power to the first display portion 110 and the second display portion 120. For example, the controller 2010 may block power supply to the second display portion 120 or set the second display portion 120 as a power saving mode, when the first display portion 110 is over the second display portion 120. The controller 2010 may block power supply to the first display portion 110 or set the first display portion 110 as a power saving mode, when the second display portion 120 is over the first display portion 110.

The sensor 2055 may include at least one sensor which may sense the predetermined action or the predetermined operation.

The sensor 2055 may include a proximity sensor for sensing whether a user is proximate to the device 100, an illuminance sensor (or an optical sensor) for sensing illuminance of a surrounding environment of the device 100, a mood scope sensor for sensing a mood of the user of the device 100, a position sensor (for example, a global positioning system (GPS) receiver) for detecting a position of the device 100, a gyroscope sensor for measuring azimuth of the device 100, an accelerometer sensor for measuring inclination and acceleration of the device based on the ground surface, a terrestrial magnetic sensor for sensing cardinal points north, south, east, and west, based on the device 100, a gesture sensor for recognizing a finger operation by sensing infrared light reflected from palms, and/or a temperature/humidity sensor for recognizing temperature and humidity of a surrounding environment of the device 100. When the position sensor is the GPS receiver, the position sensor may be referred to as being included in the communicator 2060. The gesture sensor may be referred to as an operation sensing sensor for sensing activity.

Also, the sensor 2055 may include, for example, a gravity sensor, an altitude sensor, a chemical sensor (for example, an odorant sensor), an atmospheric sensor, a fine dust measuring sensor, an ultraviolet sensor, an ozone sensor, a carbon dioxide (CO₂) sensor, and/or a network sensor (for example, based on WiFi, WiFi direct, Bluetooth, 3G, long term evolution (LTE), or near field communication (NFC)).

The sensor 2055 may include, for example, an pressure sensor (for example, a touch sensor, a piezoelectric sensor, a physical button, etc.), a state sensor (for example, an earphone terminal, a digital multimedia broadcasting (DMB) antenna, a standard terminal (for example, a terminal for recognizing whether charging is performed or not, a terminal for recognizing whether a PC is connected or not, and a terminal for recognizing whether a dock is connected or not), a time sensor, and/or a health sensor (for example, a bio-sensor, a heartbeat sensor, a blood flow rate sensor, a diabetes sensor, a blood pressure sensor, a stress sensor, etc.). However, according to the present disclosure, the sensor 2055 is not limited thereto.

A result (or a sensing value, or a sensing signal) of sensing of the sensor 2055 is transmitted to the controller 2010. The controller 2010 may sense the predetermined action or the predetermined operation based on the sensing value of the sensor 205.

The communicator 2060 may include at least one component for communication between the device 100 and at least one external device. For example, the communicator 2060 may include at least one of a short-range wireless communicator, a mobile communicator, and a broadcasting receiver. According to the present disclosure, components included in the communicator 2060 are not limited thereto.

The short-range wireless communicator may include a module for at least one of Bluetooth communication, Bluetooth low energy (BLE) communication, a near field communication unit (RFID), WLAN (WiFi) communication, ZigBee communication, Ant+ communication, WiFi direct (WFD) communication and ultra wideband (UWB) communication.

According to the present disclosure, the communication module included in the short-range wireless communicator is not limited thereto. For example, the short-range wireless communicator may include an infrared data association (IrDA) communication module. The short-range wireless communicator may use lower power Bluetooth communication when receiving a beacon signal.

The mobile communicator may exchange wireless signals with at least one of a base station, an external device, and a server, through a mobile communication network. Here, the wireless signals may include various types of data based on an exchange of a voice call signal, a video call signal, or a text/multimedia message.

The broadcasting receiver may receive a broadcasting signal and/or information related to broadcasting from the outside via a broadcasting channel. The broadcasting channel may include at least one of a satellite channel, a ground wave channel, and a radio channel, but is not limited thereto.

The communicator 2060 may transmit remark information generated in the device 100, edited remark information, and an image to an external device according to an embodiment. The communicator 2060 may receive an image and remark information related to the image from an external device according to an embodiment. Information, data, and signals transmitted and received through the communicator 2060 are not limited thereto.

The image processor 2065 may process image data received from the communicator 2060, image data stored in the memory 2040, or image data obtained by the camera 2045 to be displayed on the first display portion 110 or the second display portion 120. The image processor 2065 may perform signal processing with respect to the image data.

The audio output unit 2070 may output a sound according to user information, according to an embodiment. The audio output unit 2070 may output audio data received from the communicator 2060, audio data stored in the memory 2040, or audio data received via the audio input unit 2075.

The audio output unit 2070 may output a sound signal (for example, an inform sound) related to functions performed by the device 100. The audio output unit 2070 may include a speaker, a buzzer, etc., but is not limited thereto. The audio output unit 2070 may output a notification sound or a guide voice. The notification sound that is output from the audio output unit 2070 may include a sound indicating a display of the remark information related to an image. The guide voice that is output from the audio output unit 2070 may include a voice to identify whether to generate remark information in response to a request of generating remark information, or a voice to identify whether to edit the remark information according to a request of editing the remark information. However, according to the present disclosure, the guide voice is not limited thereto.

The audio input unit 2075 may include a microphone. The audio input unit 2075 may receive an audio signal that is input from the outside of the device 100 and convert the received audio signal to an electrical audio signal and transmit the electrical audio signal to the controller 2010. The audio input unit 2075 may be configured to perform operations based on various noise removal algorithms to remove noise generated in a process of receiving an external sound signal. The audio input unit 2075 may recognize a voice of a user.

The controller 2010 may be referred to as a processor configured to control operations of all components included in the device 100 illustrated in FIG. 20. The controller 2010 may be provided in a multiple number according to an operational environment of the device 100. For example, the controller 2010 may include a processor operating in a lower power mode of the device 100 and a processor operating in a normal mode of the device 100. The controller 2010 may include a plurality of processors separated for the components included in the device 100.

The controller 2010 may perform operations according to the operational flowchart of FIG. 9, 10, 13, 14, or 15.

The programs stored in the memory 2040 may be divided into a plurality of modules according to functions thereof. For example, the programs stored in the memory 2040 may be divided into a user interface (UI) module, a notification module, and/or an application module. However, the programs stored in the memory 2040 are not limited thereto. For example, when a touch screen is formed by combining the first display portion 110 and the first user input unit 2020, and a touch screen is formed by combining the second display portion 120 and the second user input unit 2030, the plurality of modules may include a touch screen module.

The UI module may provide graphics user interface (GUI) information for correcting the user information described in the embodiments to the controller 2010. The UI module may provide the UI, the GUI, etc. specialized for each application installed in the device 100 to the controller 2010.

The notification module may generate a signal to notify the first display portion 110 of a request of displaying at least one image or notify the second display portion 120 of a request of displaying remark information, a request of generating the remark information, or a request of editing the remark information. However, the signal generated by the inform module is not limited thereto.

The notification module may output a notification signal in the form of a video signal via the first display portion 110 and/or the second display portion 120, and may output the notification signal in the form of an audio signal via the audio output unit 2070. However, the form of the inform signal is not limited thereto.

The application module may include an image watch application set in the device 100.

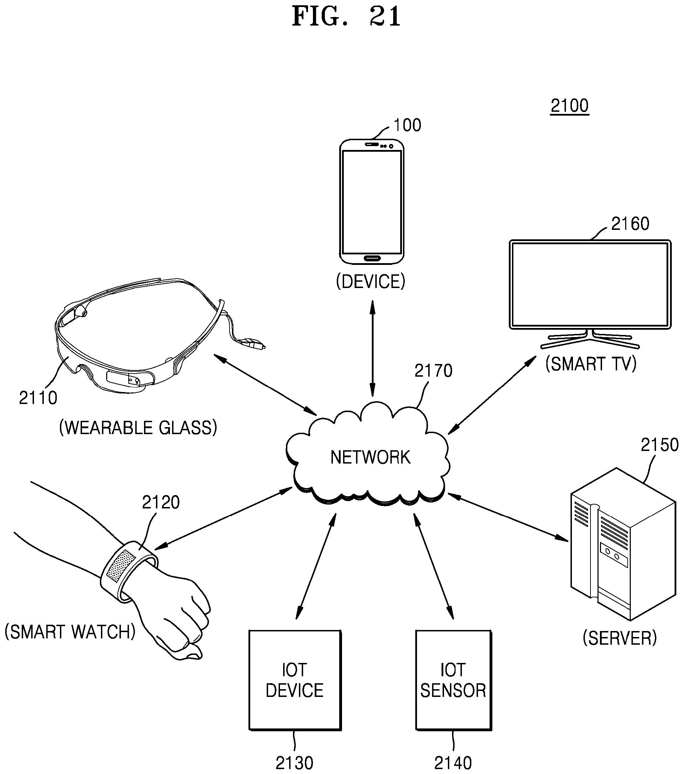

FIG. 21 is a block diagram of a system 2100 configured to provide remark information related to an image, the system 2100 including the device 100, according to an embodiment.

Referring to FIG. 21, the system 2100 may include the device 100, a wearable glass 2110, a smart watch 2120, an IoT device 2130, an IoT sensor 2140, a server 2150, a smart TV 2160, and a network 2170. According to the present disclosure, components included in the system 2100 are not limited to the components illustrated in FIG. 21. For example, the system 2100 may further include another wearable device or another smart device. Alternatively, the system 2100 may not include at least one of the components illustrated in FIG. 21.

The device 100 may receive or transmit an image from or to the wearable glass 2110, the IoT device 2130, the server 2150, and the smart TV 2160.

The device 100 may receive or transmit remark information related to the image from or to the wearable glass 2110, the smart watch 2120, the IoT device 2130, the IoT sensor 2140, the server 2150, and the smart TV 2160.

The IoT device 2130 is an IoT network-based device, and may include home appliances or office devices, but is not limited thereto. The IoT sensor 2140 is an IoT network-based sensor, and may obtain information related to a surrounding environment of the device 100 and provide the obtained information to the device 100. Accordingly, the device 100 may generate the information received from the IoT sensor 2140 as the remark information, or edit the remark information based on the received information.

The server 2150 may store an image and remark information synchronized to the image and the remark information stored in the device 100. The server 2150 may store an image of another user and remark information related to the image. The server 2150 may provide the image of the other user and the remark information related to the image to the device 100 according to a request of the device 100. When the image and the remark information stored in the device 100 are edited, the server 2150 may update an image related to the device 100 and remark information related to the image.

The smart TV 2160 may display the image displayed on the first display portion 110 of the device 100 and the remark information related to the image, displayed on the second display portion 120, according to a screen division method, based on a request of the device 100.

The smart watch 2120 may display the remark information related to the image displayed on the first display portion 110 of the device 100. When the remark information displayed on the smart watch 2120 is selected, the smart watch 2120 may send to the device 100 a request for specific information about the remark information. Accordingly, the device 100 may display the specific remark information related to the image, on the second display portion 120.

The one or more embodiments of the present invention may be embodied as a recording medium, e.g., a program module to be executed in computers, which include computer-readable commands. The computer storage medium may include any usable medium that may be accessed by computers, volatile and non-volatile media, and detachable and non-detachable media. Also, the computer storage medium may include a computer storage medium and a communication medium. The computer storage medium includes all of volatile and non-volatile media, and detachable and non-detachable media which are designed to store information including computer readable commands, data structures, program modules, or other data. The communication medium includes computer-readable commands, a data structure, a program module, and other transmission mechanisms, and includes other information transmission media.

While the present invention has been particularly shown and described with reference to exemplary embodiments thereof, it will be understood by one of ordinary skill in the art that various changes in form and details may be made therein without departing from the spirit and scope of the present invention as defined by the following claims. Hence, it will be understood that the embodiments described above are not limiting of the scope of the invention. For example, each component described in a single type may be executed in a distributed manner, and components described distributed may also be executed in an integrated form.

The scope of the present invention is indicated by the claims rather than by the detailed description of the invention, and it should be understood that the claims and all modifications or modified forms drawn from the concept of the claims are included in the scope of the present invention.

## Claims

1. A device comprising:
a first display portion configured to display at least one image;
a second display portion configured to display remark information related to the at least one image; and
a controller,
wherein the controller is configured to control the remark information to be displayed on a display location of the second display portion, which corresponds to a location of the first display portion, on which the at least one image is displayed.

2. The device of claim 1, wherein the controller is configured to determine whether to display the remark information according to a predetermined condition.

3. The device of claim 2, wherein the predetermined condition comprises at least one of
a sensing result about whether a predetermined action is performed on the device by a user,
a sensing result about whether a predetermined operation is performed by the user while the at least one image is displayed on the first display portion, and
a determination result about whether the device is set for displaying remark information.

4. The device of claim 1, further comprising:
a first user input unit configured to receive a user input based on the first display portion, and
a second user input unit configured to receive a user input based on the second display portion,
wherein the controller is configured to generate or edit the remark information based on the user input received by using the first user input unit and/or the second user input unit.

5. The device of claim 1, wherein the second display portion is configured to further display a mirror image of the at least one image.

6. The device of claim 1, wherein the controller is configured to control the second display portion to further display at least one water mark on the second display portion.

7. The device of claim 1, wherein the device comprises the first display portion and the second display portion that are physically or logically separated.

8. The device of claim 1, wherein the device provides the first display portion and the second display portion in parallel,
provides the first display portion and the second display portion such that a front surface of the first display portion and a front surface of the second display portion contact each other when the device is folded, or
provides the first display portion and the second display portion such that a back surface of the first display portion and a back surface of the second display portion contact each other when the device is folded.

9. The device of claim 1, further comprising a power supplier configured to supply power to the first display portion and the second display portion,
wherein the controller is configured to control the power supplier to selectively supply power to the first display portion and the second display portion.

10. The device of claim 1, wherein the first display portion and the second display portion comprise same or different materials.

11. The device of claim 1, wherein the first display portion is configured to display a plurality of images comprising a first image and a second image, and
the controller is configured to control the second display portion to display first remark information and second remark information on locations of the second display portion, which correspond to locations of the first display portion, on which the first image and the second image are displayed, respectively.

12. The device of claim 1, wherein the at least one image comprises a first object and a second object, and
the controller is configured to control the second display portion to display first remark information and second remark information on locations of the second display portion, which correspond to locations of the first display portion, on which the first object and the second object are displayed, respectively.

13. A method of providing remark information related to an image, via a device, the method comprising:
displaying at least one image on a first display portion of the device; and
displaying remark information related to the at least one image on a display location of the second display portion, which corresponds to a location of the first display portion, on which the at least one image is displayed.

14. The method of claim 13, further comprising:
determining whether to display the remark information according to a predetermined condition.

15. The method of claim 14, wherein the predetermined condition comprises at least one of
a sensing result about whether a predetermined action is performed on the device by a user,
a sensing result about whether a predetermined operation is performed by the user while the at least one image is displayed on the first display portion, and
a determination result about whether the device is set for displaying remark information.

16. The method of claim 13, further comprising:
generating or editing the remark information based on a first user input received based on the first display portion and/or a second user input received based on the second display portion.

17. The method of claim 13, wherein the displaying of the remark information comprises displaying, on the second display portion, a mirror image of the image displayed on the first display portion.

18. The method of claim 13, wherein the displaying of the remark information comprises displaying at least one water mark on the second display portion.

19. The method of claim 13, further comprising
controlling power to be selectively supplied to the first display portion and the second display portion.

20. A non-transitory computer-readable recording medium having embodied thereon a computer program for executing the method of claim 13.
